# EUROPEAN PATENT APPLICATION

(11) **EP 1 130 920 A2**
(43) Date of publication of application: **05.09.2001**
(21) Application number: 01300519.4
(22) Date of filing: 22.01.2001
(51) Int. Cl.: H04N 7/173

(54) **Method, apparatus and system for motion picture signal distribution**

(30) Priority: 03.02.2000 US 497586
(71) Applicant: LUCENT TECHNOLOGIES INC., Murray Hill, New Jersey 07974-0636 (US)
(72) Inventor: Azzarto, Matthew John, Hoboken, New Jersey 07030 (US)
(74) Representative: Watts, Christopher Malcolm Kelway, Dr.

(57) **Abstract**

Motion picture signals are delivered from a central video server to multiple geographically-dispersed locations. The motion picture signals are stored in a specified format, e.g., a particular high-definition format, on the video server. One or more of the stored signals are controllably delivered from the video server to a multi-stream encoder in accordance with regional playlist information specifying the particular signals to be transmitted for a given location and time. The multi-stream encoder generates compressed versions of the particular signals to be transmitted, and the resulting compressed versions are combined to form a single-stream signal suitable for transmission over a transmission medium to a theater or other remote presentation site. The playlist information may be stored on an automated regional playlist controller coupled to the video server. The controller is operative to direct the transmission of selected motion picture signals stored on the video server at times designated by the playlist information. The transmission medium may be, e.g., an Asynchronous Transfer Mode (ATM) fiber network, one or more satellite communication channels, or other suitable media.

## Description

### Field Of The Invention

The present invention relates generally to signal distribution, and more particularly to techniques for distribution of high-definition signals corresponding to motion pictures or other types of film-related information suitable for presentation in theaters.

### Background Of The Invention

The ongoing expansion of the film industry has created a need for an improved system for film distribution. For example, the number of so-called "multiplex" theaters, as well as the number of screens supported by each such theater, are rapidly increasing both domestically and abroad. However, conventional techniques of film distribution nonetheless continue to rely on the physical shipment of actual film to each and every theater location. This approach involves considerable expense, not only in the production of multiple copies of a given film, but also in the many shipping and handling operations required to ensure that a given copy arrives intact at the appropriate destination. Moreover, films distributed in this manner are susceptible to damage, both during shipping and handling as well as during presentation, thereby often necessitating the distribution of multiple redundant copies of a given film to a single presentation location.

The use of the above-described conventional film distribution approach has persisted despite significant recent advances in information transmission infrastructure, such as fiber networks, satellite systems, computer networks, etc.

A number of techniques have been proposed for electronic transmission of film-related information, i.e., motion picture signals. One such technique, described in U.S. Patent No. 5,924,013, issued July 13, 1999 to Guido et al. and entitled "Method and Apparatus for Transmitting Motion Picture Cinematic Information for Viewing in Movie Theaters and Ordering Method Therefor," utilizes radio frequency (RF) transmission of cinematic information from a central site to a movie theater. This technique suffers from a number of significant drawbacks. For example, the type of RF distribution used in this technique may have difficulty supporting the relatively complex playlist requirements associated with high concentrations of multi-screen theaters. Another drawback of this technique as well as other proposed electronic transmission techniques is that they generally fail to take full advantage of recent improvements in information transmission infrastructure, such as Asynchronous Transfer Mode (ATM), Internet Protocol (IP) and satellite transmission.

The continued widespread use of the conventional physical distribution approach indicates that a need remains for improved motion picture signal distribution techniques which better exploit the recent advances in information transmission infrastructure.

### Summary Of The Invention

In accordance with the invention, motion picture signals are transmitted from a central video server to multiple geographically-dispersed locations across a communications network. The motion picture signals are stored in a specified format, e.g., a high-definition format, on the video server. One or more of the stored signals are controllably delivered from the video server to a multi-stream encoder in accordance with regional playlist information specifying the particular signals to be transmitted for a given location and time. The multi-stream encoder generates compressed versions of the particular signals to be transmitted, e.g., MPEG-2 compressed versions of the signals, and the resulting compressed versions are combined to form a single-stream signal suitable for transmission over a transmission medium to a theater or other remote presentation site. The single-stream signal may be in, e.g., an Asynchronous Serial Interface (ASI) signal format, a Society of Motion Picture and Television Engineers (SMPTE) 310M format, a SMPTE 292M format, or other format suitable to a particular transmission medium.

The playlist information may be stored on an automated regional playlist controller coupled to the video server. The controller is operative to direct the transmission of selected motion picture signals stored on the video server at times designated by the playlist information. For example, the system may be configured to deliver multiple motion picture signals simultaneously to the same remote presentation site. A given remote presentation site may be, e.g., a multi-screen theater, with a particular motion picture signal associated with each of the theaters.

The transmission medium may be, e.g., a packet-based communications network such as an Asynchronous Transfer Mode (ATM) fiber network. In this case, the compressed versions may be packetized and inserted into an ATM cell stream. Other types of packet-based communication networks can also be used, such as, e.g., Internet Protocol (IP) networks. As another example, the transmission medium may be one or more satellite communication channels. In this case, the different compressed motion picture signals may be statistically multiplexed and subsequently transmitted using a vestigial sideband (VSB) digital transmission technique.

Advantageously, a system configured in accordance with the invention provides improved delivery of high-definition video and other motion picture signals to multiple geographically-dispersed locations. The invention can be applied to other types of digital information, including, e.g., data, audio and image information, as well as to combinations of these and other types of information. In addition, as previously noted, the invention may be implemented using a wide variety of transmission media other than those noted above, such as the Internet and other computer networks, as well as combinations of these and other media.

### Brief Description Of The Drawings

FIG. 1 is a block diagram of a motion picture signal distribution system in accordance with a first illustrative embodiment of the invention.

FIG. 2 is a block diagram of a motion picture signal distribution system in accordance with a second illustrative embodiment of the invention.

### Detailed Description of the Invention

The present invention provides an end-to-end system for direct-to-theater electronic distribution of motion pictures and other film-related information. The invention in the illustrative embodiments described herein allows distribution of motion pictures to multiple geographically-dispersed motion picture theaters or other remote presentation sites linked to a central automated server via a secure network or other broadband transmission medium. Motion pictures may be transmitted from the automated server over the transmission medium directly to the theaters, based on a regional time schedule. The distribution may be in the form of a high-definition resolution digital stream including both video and the associated audio information.

Advantageously, such a system fully and efficiently automates the film distribution process, thereby substantially reducing the costs associated with film distribution, while also ensuring quality and reproducibility of the delivered product. The system will be described below in conjunction with two illustrative embodiments, although it will be apparent to those skilled in the art that the invention is also applicable to other system configurations.

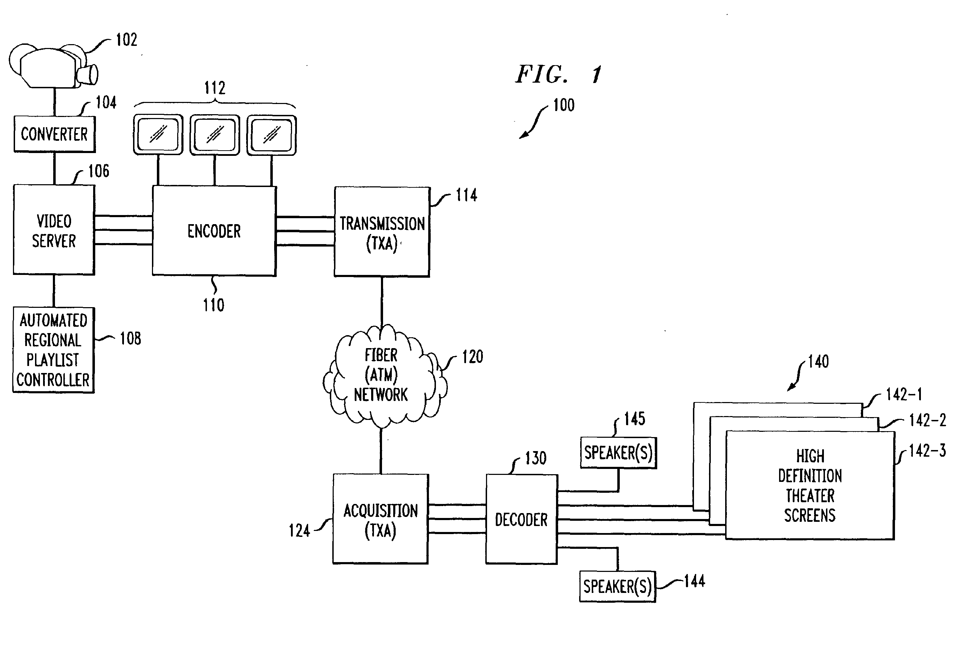

FIG. 1 shows a motion picture signal distribution system 100 in accordance with the first illustrative embodiment of the invention. In the system 100, a film source 102 generates a set of film corresponding to a motion picture or other type of film-related information to be distributed to multiple theaters or other locations for presentation to audiences.

A converter 104 is used to convert the film to an electronic motion picture signal, e.g., an audio and video signal. The electronic motion picture signal is applied to a video server 106, which may also receive similar signals from other converters and film sources not shown in the figure. In applications in which the film source 102 is capable of delivering an electronic motion picture signal, the converter 104 may be eliminated.

The video server 106 records the motion picture signal in an uncompressed high-definition format. For example, the video server may be configured to store a video portion of the motion picture signal in a known high-definition format, e.g., a 1080i or 720p format, with embedded audio in a known audio format, e.g., an Audio Engineering Society (AES) AES3 format, a Dolby E 5.1 surround sound audio format, or other suitable format.

The 1080i and 720p formats are high-definition formats described in Society of Motion Picture and Television Engineers (SMPTE) 274M, "Proposed SMPTE Standard for Television, 1920x1080 Scanning and Analog and Parallel Digital Interfaces for Multiple Picture Rates," and ANSI/SMPTE 296M-1997, "SMPTE Standard for Television, 1280x720 Scanning, Analog and Digital Representation and Analog Interface," both of which are incorporated by reference herein. The motion picture signal can be configured in such formats using the converter 104.

The video server 106 may include a substantial storage capacity, e.g., multiple disk drives each capable of storing up to 48 Gigabytes (GB) or more of information. The video server 106 further includes multiple playback channels which can simultaneously access one or more the disk drives via an internal fiber channel or other type of access medium.

Under control of an automated regional playlist controller 108, one or more output digital streams are generated by the video server 106 and supplied to an encoder 110. The multiple digital streams generated by the video server 106 may be in a known format, such as the SMPTE 292M format. The SMPTE 292M format is described in SMPTE 292M, "Proposed SMPTE Standard for Television, Bit-Serial Digital Interface for High-Definition Television Systems," which is incorporated by reference herein.

The automated regional playlist controller 108 may be implemented as a computer or other digital data processing device which stores a playlist in the form of an event schedule covering multiple regions of distribution. The event schedule cues the server 106 to play the digital streams corresponding to selected films at the desired times. The controller 108 may also direct the assignment of channel mapping as well as concatenating segments, such as region-specific news clips and trailers, for insertion into the digital streams generated by video server 106.

In one possible implementation, the controller 108 is configured as a personal computer running a Windows NT operating system and including a well-known SMPTE timecode card in one of its peripheral component interconnect (PCI) slots. An application running on the computer provides a graphical user interface (GUI) and is operative to send timed messages to the video server 106 for initiating playback, such that all server output streams are synchronized to the SMPTE timecode. The application may also be configured to provide other operations, such as controlling transitions between different streams, selecting a particular high-definition format, and selecting other parameters such as audio sampling rate and video encoding rate.

Those skilled in the art will recognize that many other configurations of hardware and software may be used to implement the functions of the controller 108. It should also be noted that the controller 108 may interface with other elements of the system 100, such as converter 104 and encoder 110, in providing the above-described functionality. The encoder 110 encodes each of the uncoded digital streams received from the video server 106. For example, the encoder 110 may be implemented as a VideoStar Encoder HD device from Lucent Digital Video, a business division of Lucent Technologies Inc. of Murray Hill, New Jersey, http://www.lucent.com/ldv. Such an encoder in this illustrative embodiment receives multiple uncompressed high definition digital stream inputs in a format such as SMPTE 292M, encodes each of the streams using a compression technique such as MPEG-2, maps the resulting encoded streams into virtual channels, and transmits the virtual channels as, e.g., Asynchronous Serial Interface (ASI) signals out to the transmission section of the system for ATM distribution.

ASI is a digital video broadcasting (DVB) standard which is described in greater detail in, e.g., http://www.tm.agilent.com/tmo/pia/PhaseNoise/PIAProd/Notes/English/ ASI_Paper.html, which is incorporated by reference herein.

Additional details regarding the MPEG-2 standard may be found in, e.g., "Information Technology Generic Coding of Moving Pictures and Associated Audio Information: Video," ISO/IEC DIS 13818-2, which is incorporated herein by reference. The invention can also utilize other encoding standards.

The encoder 110 is also configured in this embodiment to provide local decoding of the multiple encoded streams for delivery to a set of terminals 112 for monitoring and quality assurance purposes.

The virtual channels generated by the encoder 110 are delivered to a transmission element 114 which configures the virtual channels into a format suitable for transmission over an Asynchronous Transfer Mode (ATM) fiber network 120. The transmission element 114 may be, e.g., a LINKRunner TXA video gateway from Lucent Digital Video. The LINKRunner TXA is designed to move broadcast-quality video between a video interface and a network interface. The LinkRunner TXA can support private-line or ATM telecommunications network interfaces at speeds up to 155 Mbps, including ATM-switched virtual circuits, and provides both ATM Adaptation Layer 5 (AAL5) and AAL1 capabilities. The acronym TXA stands for Transmission Across ATM. Other types of transmission elements may also be used to provide a suitable interface between the encoder 110 and the fiber network 120.

The above-noted AAL5 and AAL1 capabilities are described in greater detail in International Telecommunication Union-Telecommunication Standardization Sector (ITU -T) Recommendations 1.363.5 and I.363.1, Series I: Integrated Services Digital Network, Overall Network Aspects and Functions-Protocol Layer Requirements, B-ISDN ATM Adaptation Layer Specification, Type 5 AAL and Type 1 AAL, respectively, August 1996, both of which are incorporated by reference herein.

The transmission element 114 may thus be configured to convert ASI signal outputs from the encoder 110 to ATM signals suitable for transmission over the fiber network 120. As previously noted, using the LINKRunner TXA or other suitable device, it is possible to transmit multiple programs at rates up to 155 Mbps over the fiber network 120. Of course, higher rates may be supported using other types of transmission elements.

A given remote theater site in this embodiment includes an acquisition element 124 which receives a stream of ATM cells from the transmission element 114. The acquisition element 124 may also be implemented as a Lucent Digital Video LINKRunner TXA which converts a received ATM cell stream to multiple ASI signals which are supplied to a decoder 130.

The decoder 130 may be implemented as a VideoStar Decoder HD device from Lucent Digital Video. Such a decoder in this illustrative embodiment converts multiple ASI signals to individual MPEG-2 digital streams, decodes the MPEG-2 digital streams, and generates uncompressed digital stream outputs in an SMPTE 292M format. The corresponding 1080i or 720p format high-definition video signals are supplied to display devices associated with a set of high-definition theater screens 140 which include individual screens 142-1, 142-2 and 142-3.

Audio information associated with a motion picture signal to be displayed on a given one of the screens 140 is supplied to a corresponding set of speakers 144, 145. Although only a single set of speakers are shown in this illustration, it is to be understood that each of the screens 140 will generally have a separate set of speakers associated therewith. In addition, each theater may of course have more than two speakers in its set of speakers. For example, six or more speakers may be required in each theater in order to support the above-noted Dolby E 5.1 surround sound audio format.

It will be appreciated by those skilled in the art that although only a single remote theater site is shown in FIG. 1, the invention can support simultaneous delivery of motion picture signals to multiple geographically-dispersed remote theaters or other presentation sites, each having multiple theaters associated therewith. Moreover, although the particular set of theater screens 140 as shown in FIG. 1 includes three screens, this is by way of example and not limitation, i.e., the invention can support remote theater sites having other numbers of screens associated therewith.

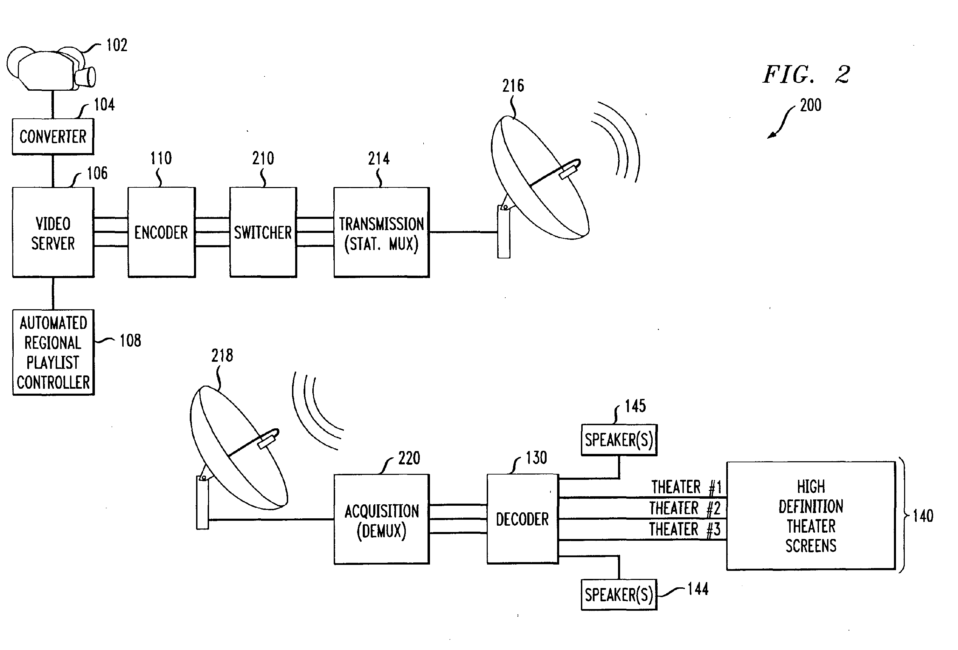

FIG. 2 shows another illustrative embodiment of a motion picture signal distribution system 200 in accordance with the invention. The system 100 includes film source 102, converter 104, video server 106, playlist controller 108, encoder 110, decoder 130, theater screens 140 and speakers 144, 145, all of which are configured to operate in a manner similar to that previously described in conjunction with FIG. 1.

However, in this embodiment, the virtual channel outputs of the encoder 110 are applied to a switcher 210. The switcher 210 operates as an interface between the encoder 110 and a transmission element 214, which in this embodiment is configured to perform conventional statistical multiplexing operations on the virtual channels applied thereto. For example, the transmission element 214 may be implemented as a Network Interface Module (NIM) such as the NIM-100 from Lucent Digital Video. The NIM-100 uses dynamic bit allocation to statistically multiplex several virtual channels received from the switcher 210 into a single stream, e.g., an ASI stream.

The switcher 210 may be implemented as a master control switcher. Such a device permits the controlled selection of particular input feeds for delivery into an output stream, monitors the input feeds prior to multiplexing, and executes operations such as fades, wipes, cuts or other transitions between the input feeds. For example, switcher 210 may be configured to execute a transition between news reel clips on one feed from encoder 110 and film or other program content on another feed from encoder 110. Although not shown in the figure, one or more terminals may be associated with the switcher 210 for monitoring and quality assurance purposes. Such terminals may be configured in a manner similar to the set of terminals 112 of FIG. 1.

Additional details regarding statistical multiplexing techniques suitable for use in conjunction with the present invention may be found in, e.g., M. Perkins and D. Arnstein, "Statistical Multiplexing of Multiple MPEG-2 Video Programs in a Single Channel," SMPTE Journal, pp. 596-599, September 1995, which is incorporated by reference herein.

The output stream from the transmission element 214 is then supplied to a satellite transmission system 216. The satellite transmission may utilize, e.g., Advanced Television Systems Committee (ATSC)-recommended standards for vestigial sideband (VSB) digital transmission, as described in ATSC Digital Television Standard, Document A/53, September 1995, which is incorporated by reference herein. Other known techniques may also be used, such as the ATSC Standard entitled "Modulation and Coding Requirements for Digital TV (DTV) Applications Over Satellite," Document A/80, July 1999, which is incorporated by reference herein.

A more particular example of VSB transmission suitable for use in conjunction with the present invention is a simulcast terrestrial broadcast mode known as 8-level VSB or simply 8-VSB, as described in greater detail in M. Robin and M. Poulin, "Digital Television Fundamentals," McGraw-Hill, New York, 1998, which is incorporated by reference herein.

The transmitted signal in the illustrative embodiment of FIG. 2 may be in a SMPTE 310M format, as described in "SMPTE 310M, SMPTE Standard for Television, Synchronous Serial Interface for MPEG-2 Digital Transport Stream," which is incorporated by reference herein. Other formats may also be used.

The system 200 of FIG. 2 further includes a satellite reception system 218 which may be installed at a particular remote theater site. The satellite reception system 218 receives the signal transmitted by the satellite transmission system 216, and delivers it to an acquisition element 220 which applies a demultiplexing operation to the received signal in order to recover the multiple virtual channels therefrom. These channels are applied to decoder 130 which processes them in a manner similar to that previously described for delivery to display devices associated with one or more of the theater screens 140 and corresponding speakers 144, 145.

Although illustrated herein in applications involving distribution of motion picture signals to multi-screen theaters, the invention may be used to distribute such signals to other types of remote presentation sites, including, e.g., home theaters, personal video systems, computers, etc.

It should be noted that the above-described embodiments of the invention are illustrative only. For example, the invention can be used with other types of information, e.g., image information, data, etc., and with other types of communication systems, such as Internet-based broadcasting systems, computer networks, etc. In addition, the particular elements of the systems 100 and 200 described herein are shown by way of example, and many alternative arrangements of these and other elements may be used to implement the invention. These and numerous other alternative embodiments within the scope of the following claims will be apparent to those skilled in the art.

## Claims

1. A method of distributing motion picture signals, the method comprising the steps of:
storing the motion picture signals in a specified format on a video server;
controllably delivering at least one of the motion picture signals from the video server to a multi-stream encoder in accordance with playlist information, the multi-stream encoder generating a compressed version of the at least one motion picture signal; and
combining the compressed version of the at least one motion picture signal with at least one other compressed signal to form a single-stream signal suitable for transmission over a transmission medium to a remote presentation site.

2. The method of claim 1 wherein the playlist information is stored on an automated regional playlist controller coupled to the video server, the playlist controller being operative to direct the delivery of selected ones of a plurality of motion picture signals stored on the video server at times designated by the playlist information.

3. The method of claim 2 wherein the playlist controller is implemented at least in part as a computer.

4. The method of claim 1 wherein the compressed version of the motion picture signal is compressed in accordance with an MPEG-2 standard.

5. The method of claim 1 wherein the combining step operates on the compressed version of the motion picture signal in an Asynchronous Serial Interface (ASI) signal format.

6. The method of claim 1 wherein the single-stream signal is in a Society of Motion Picture and Television Engineers (SMPTE) 292M format.

7. The method of claim 1 wherein the single-stream signal is in an SMPTE 310M format.

8. The method of claim 1 wherein the combining step further comprises packetizing the compressed version of the motion picture signal, and inserting the resulting packets into a packetized stream also including packets associated with at least one other motion picture signal.

9. The method of claim 1 wherein the combining step further includes statistically multiplexing the compressed version of the motion picture signal with a compressed version of at least one other motion picture signal.

10. The method of claim 1 wherein the transmission medium comprises a fiber network.

11. The method of claim 1 wherein the transmission medium comprises an Asynchronous Transfer Mode (ATM) network.

12. The method of claim 1 wherein the transmission medium comprises at least one satellite transmission channel.

13. The method of claim 1 wherein the single-stream signal is transmitted using a vestigial sideband (VSB) digital transmission technique.

14. The method of claim 1 wherein a plurality of motion picture signals are delivered simultaneously to the same remote presentation site.

15. The method of claim 1 wherein the remote presentation site comprises a multi-screen theater, with a particular motion picture signal associated with each of the theaters.

16. A motion picture signal distribution system comprising means for carrying out a method as claimed in any of the preceding claims.

17. An apparatus for use in a motion picture signal distribution system, the apparatus comprising:
a video server for storing a plurality of motion picture signals in a specified format, the video server being operative to controllably deliver at least one of the motion picture signals to a multi-stream encoder in accordance with playlist information, the multi-stream encoder generating a compressed version of the at least one motion picture signal, the compressed version of the at least one motion picture signal being combinable with at least one other compressed signal to form a single-stream signal suitable for transmission over a transmission medium to a remote presentation site.

18. An apparatus for use in a motion picture signal distribution system, the apparatus comprising:
a multi-stream encoder operative to receive at least one motion picture signal from a video server which stores a plurality of motion picture signals in a specified format, the at least one motion picture signal being controllably delivered to the multi-stream encoder from the video server in accordance with playlist information, the multi-stream encoder generating a compressed version of the at least one motion picture signal, the compressed version of the at least one motion picture signal being combinable with at least one other compressed signal to form a single-stream signal suitable for transmission over a transmission medium to a remote presentation site.
